# EUROPEAN PATENT SPECIFICATION

(11) **EP 2 310 567 B1**
(45) Date of publication and mention of the grant of the patent: **29.08.2012**
(21) Application number: 08787672.8
(22) Date of filing: 16.06.2008
(51) Int. Cl.: D21B 1/32, D21B 1/34

(54) **PULPER FOR TREATING A FIBER MASS**
PULPER ZUR BEHANDLUNG VON FASERSTOFF
TRITURATEUR DE TRAITEMENT D'UNE MASSE DE FIBRES

(43) Date of publication of application: 20.04.2011
(73) Proprietor: Tampulping Oy, 33100 Tampere (FI)
(72) Inventor: HAUTALA, Jouko, FIN-33400 Tampere (FI)
(74) Representative: Nieminen, Taisto Tapani
(86) International application number: PCT/FI2008/000073
(87) International publication number: WO 2009/153384

(56) References cited:
- DE-C- 964 286
- US-A- 3 843 063
- US-A- 4 460 132
- US-B1- 6 379 505

## Description

The invention relates to a pulper for treating a fiber mass for use in the paper industry, said pulper comprising: a pulper container, a screen plate installed to said container, a discharge channel for discharging the fiber mass that passes through the screen plate out of the container, and a mixing rotor installed in the container and equipped with wings, the purpose of which is to pulp and to mix the fiber mass in the container and keep the screen plate unblocked, wherein the rotor comprises:
- pulping wings rotating around an axis,
- cleaning wings for cleaning the screen plate, said cleaning wings being arranged next to the pulping wings and rotating around the same axis, and
- a rotating plate, which rotates along the pulping and cleaning wings, said rotating plate being located between said pulping wings and said cleaning wings, the outer diameter of said rotating plate being essentially the same as the outer diameter of the pulping wings .

Previously pulpers are known in which either the same wings mix the mass and keep the screen plate clean or in which pulpers there are wings suitable for the mixing higher and the wings suitable for the cleaning of the screen plate lower, for example described in the publications FI-70608 and FI-71359. The upper wings are for example screw-like or also wings that are meant to tear the mass. The raw materials to be pulped, such as recycling paper, recycling cardboard or even garbage with a fibre content, for example garbage REF that is pre-processed for the burning, include more or less wearing particles, iron wires, stones and glass. In the known pulper solutions these wearing particles have a free access to flow till the screen plate and thus cause the wearing of the screen plate. Sometimes the rotor and the screen plate have to be changed every month.

US patent 4,460,132 discloses an apparatus for pulping paper into a pulp suspension. A vertical container has an upper paper pulping zone and a lower pulp diluting and outlet zone beneath the pulping zone. A narrowed despecking slot communicates between the two zones. A rotor in the container circulates and breaks up the paper in the presence of the liquid in the pulping zone. Ribs on the rotor cooperate with stators in the container for defining the despecking slot. A pulp suspension dilution water inlet communicates into the dilution zone. The outlet from the container also communicates from the dilution zone. A screen protects the outlet from the dilution zone against exit of large particles therethrough and vanes on the rotor clean the screen.

The raw materials to be used include elongated, undecomposable materials, such as tapes, plastics, pieces of strings and iron wires. First these begin to form small spun parts when the lower ends of the strings become part of the rotation of the rotor and other ends are part of a balanced flow. Slowly these spun parts become larger till the pulper needs to be emptied and the spun parts need to be lifted out of the pulper. Sometimes this emptying needs to be done 2 - 3 times per day. In both cases the pulper is out of the production and especially the wearing causes a lot of maintenance costs.

In order to remove the above mentioned disadvantages a new pulper equipped with rotor wings has been developed of which it is characteristic that the outer diameter of said rotating plate differs from the outer diameter of the cleaning wings while being not more than 15 % smaller or larger than the outer diameter of the cleaning wings, and the distance of the pulping wings in relation to the screen plate and the cleaning wings is adjustable.

The advantage of the pulper according to the invention is the fact that heavier goods and materials included in the mass and that are possibly harmful for the screen plate become directed to the outer part of the outer diameter of the screen plate in the container and they cannot at least be directed directly to the screen plate. With the distance adjusting of the wings the flow of the mass can be directed. The screen plate will last longer and thus the standstills of the pulper will be reduced.

In the following the invention is described more detailed by referring to the accompanying drawing in which
Figure 1 shows a rotor located in the pulper container as a side view.
Figure 2 shows a way of adjusting the distance of the wings in the rotor of the figure 1.

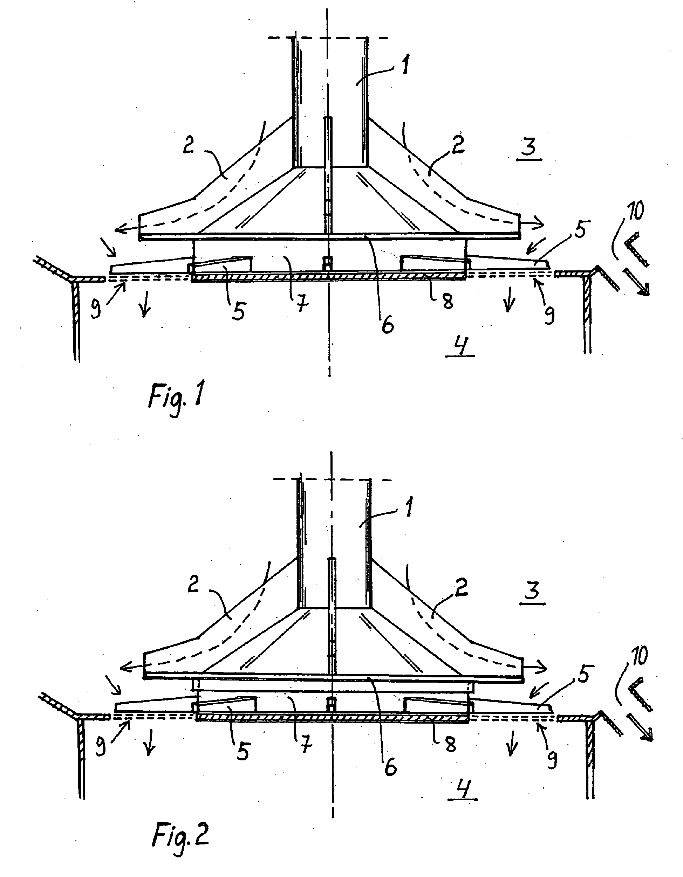

In the figure 1 there is a rotor equipped with two wings located in the container 3. In the example the rotating rotor hangs supported by a pipe 1 in such a way that its lower wings 5 that clean the screen plate 9 are located only a little bit above the screen plate 9. The lower wings 5 sweep the surface of the ring-shaped screen plate 9 while rotating and keep it clean. The mid part 8 of the screen plate 9 is a solid plate. A conventional solution is also the solution that the rotor is equipped with bearing beneath in the space underneath the container 3.

The pulping wings 2 located above the wings 5 belong to the rotor which pulping wings rotate the mass in the container 3 and separate fibres from each other. According to the invention there is a round plate 6 that rotates with the wings between the wings 5 and 2 which plate prevents the mass located above to get onto the screen plate 9 located straight undearneath. Due to the rotation of the rotor at least the heaviest materials fly to the outer edge of the container and cannot get directly to the screen plate 9. There is a removal unit 10 at the outer edge of the container from which removal unit the materials that cannot penetrate the screen plate 9 can become removed.

The plate 6 according to the invention is most advantageously attached to the upper wings 2 and its outer diameter is the same as the outer diameter of the wings 2. The outer diameter of the ring-shaped screen plate 9 is most advantageously the same class as the diameter of the plate 6. Preferably the screen plate 9 has a diameter that is a little bit, for example 5 - 20 % larger or not more than 15 % smaller than the plate 6.

There is also a shown barrel part 7 between the plate 6 and the wings 5 which barrel part attaches the wings 2 and 5 closely to each other. The structure can also be such as structure as the figure 2 shows so that the distance of the upper wings 2 and the plate 6 can be adjusted in relation to the screen plate 9 and the lower wings 5. The case of the barrel 7 can for example be telescopically lengthening. A pipe 1, which is directed from the wings 2 in direction of the rotor axis, prevents elongated materials from getting spun to each other while the rotor is rotating.

The rotor can be located into the pulper container to have any position. Recommended positions are such positions that the screen plate 9 is located on the bottom of the container, like the figure 1 shows. The screen plate 9 can also be located at the roof of the container the arrangement thus being upside down in relation to the figure 1. Also other positions between these are possible.

## Claims

1. A pulper for treating a fiber mass for use in the paper industry, said pulper comprising:
- a pulper container (3),
- a screen plate (9) installed to said container (3),
- a discharge channel for discharging the fiber mass that passes through the screen plate (9) out of the container (3), and
- a mixing rotor installed in the container (3) and equipped with wings (2, 5) the purpose of which is to pulp and to mix the fiber mass in the container (3) and keep the screen plate (9) unblocked wherein the rotor comprises:
- pulping wings (2) rotating around an axis,
- cleaning wings (5) for cleaning the screen plate (9), said cleaning wings (5) being arranged next to the pulping wings (2) and rotating around the same axis, and
- a rotating plate (6), which rotates along the pulping and cleaning wings (2, 5), said rotating plate (6) being located between said pulping wings (2) and said cleaning wings (5), the outer diameter of said rotating plate (6) being essentially the same as the outer diameter of the pulping wings (2),
**characterized in that**:
- the outer diameter of said rotating plate (6) differs from the outer diameter of the cleaning wings (5) while being not more than 15 % smaller or larger than the outer diameter of the cleaning wings (5), and the distance of the pulping wings (2) in relation to the screen plate (9) and the cleaning wings (5) is adjustable.

2. A pulper according to the claim 1, **characterized in that** there is a mid piece (7) that can be lengthened telescopically between the pulping wings (2) and the cleaning wings (5).

3. A pulper according to the claim 1, **characterized in that** the rotating plate (6) is attached to the pulping wings (2).

4. A pulper according to the claim 1, **characterized in that** the pulping wings (2), the cleaning wings (5) and the rotating plate (6) rotate together with the help of the same operating device.

5. A pulper according to the claim 1, **characterized in that** there is a pipe portion (1) directed away from the pulping wings (2) in the center of the rotor, which pipe portion (1) rotates with the rotor.

6. A pulper according to the claim 1, **characterized in that** the fiber mass is removed from the pulping wings (2) essentially in the direction of the rotating plate (6).

## Patentansprüche

1. Ein in der Papierindustrie einzusetzender, Faserstoff bearbeitender Pulper, der einen Pulperbehälter (3), eine in den vorgenannten Behälter installierte Siebplatte (9), einen Abführungskanal für den, durch die Siebplatte (9) aus dem Behälter heraus gedrungenen Faserstoff sowie einen im Behälter (3) mit Flügeln (2), (5) versehenen Mischrotor, der zum Zerfasern und zum Mischen des Stoffes im Behälter (3) sowie zum Halten der Siebplatte (9) ohne Verstopfungen dienen soll, enthält, wobei der Rotor
- um die Achse rotierende Flügel zum Zerfasern (2),
- Flügel zum Reinigen (5) der Siebplatte (9), wobei die vorgenannten Flügel (5) am nächsten der Flügel (2) zum Zerfasern angeordnet sind und wobei die Flügel um die gleiche Achse rotieren,
- ein rotierende Scheibe (6), die mit den Flügeln (2), (5) zum Zerfasern und zum Reinigen dreht, wobei die vorgenannte rotierende Scheibe (6) zwischen den vorgenannten Flügeln zum Zerfasern (2) und den Flügeln zum Reinigen (5) angeordnet ist, wobei der Außendurchmesser der vorgenannten Scheibe (6) im wesentlichen gleich dem Durchmesser der Flügeln zum Zerfasern (2) ist, aufweist, **gekennzeichnet dadurch, dass** sich der Außendurchmesser der vorgenannten rotierenden Scheibe (6) von dem Außendurchmesser der Flügeln zum Reinigen (5) unterscheidet und dass er nicht mehr als 15 % kleiner oder grösser ist als der Außendurchmesser der Flügel zum Reinigen (5) und dass der Abstand zu Flügeln zum Zerfasern (9) und zu Flügeln zum Reinigen (5) einstellbar ist.

2. Pulper nach Anspruch 1, **gekennzeichnet dadurch, dass** zwischen den Flügeln zum Zerfasern (2) und den Flügeln zum Reinigen (5) ein sich teleskopartig verlängerndes Distanzstück (7) angeordnet ist.

3. Pulper nach Anspruch 1, **gekennzeichnet dadurch, dass** die rotierende Scheibe (6) an den Flügeln zum Zertasern (2) befestigt ist.

4. Pulper nach Anspruch 1, **gekennzeichnet dadurch, dass** die Flügel zum Zerfasern (2) und die zum Reinigen (5) sowie die rotierende Scheibe (6) gemeinsam mit Hilfe des gleichen Antriebs drehen.

5. Pulper nach Anspruch 1, **gekennzeichnet dadurch, dass** sich im Mittelpunkt des Rotors ein aus den Flügeln zum Zentrieren (2) weg weisender Rohrabschnitt (1) befindet, der mit dem Rotor dreht.

6. Pulper nach Anspruch 1, **dadurch gekennzeichnet, dass** der Faserstoff aus den Flügeln zum Zerfasern (2) im Wesentlichen in Richtung der Scheibe (6) abgeführt wird.

## Revendications

1. Un triturateur de traitement d'une masse de fibres pour l'utilisation dans l'industrie du papier, ledit triturateur comportant :
- un récipient du triturateur (3),
- une plaque de tamisage (9) montée sur ledit récipient (3),
- un canal de décharge pour décharger hors du récipient (3) la masse de fibres qui passe à travers la plaque de tamisage (9), et
- un rotor de mélange installé dans le récipient (3) et équipé d'ailettes (2, 5) dont le but est de réduire en pâte et de mélanger la masse de fibres dans le récipient (3) ainsi que de maintenir la plaque de tamisage (9) débloquée, le rotor comportant :
- les ailettes de réduction en pâte (2) tournant autour d'un axe,
- les ailettes de nettoyage (5) pour nettoyer la plaque de tamisage (9), lesdites ailettes de nettoyage (5) étant montées à côté des ailettes de réduction en pâte (2) et tournant autour du même axe, et
- une plaque tournante (6) qui tourne avec les ailettes de réduction en pâte et les ailettes de nettoyage (2, 5), ladite plaque tournante (6) étant située entre lesdites ailettes de réduction en pâte (2) et lesdites ailettes de nettoyage (5), le diamètre extérieur de la plaque tournante (6) étant essentiellement le même que le diamètre extérieur des ailettes de réduction en pâte (2),
**caractérisée en ce que** :
le diamètre extérieur de ladite plaque tournante (6) diffère du diamètre extérieur des ailettes de nettoyage (5) bien que étant tout au plus de 15 pour cents plus petit ou
plus grand que le diamètre extérieur des ailettes de nettoyage (5), et la distance des ailettes de réduction en pâte (2 est ajustable par rapport à la plaque de tamisage (9) et aux ailettes de nettoyage (5).

2. Un triturateur selon la revendication 1 **caractérisé en ce qu'**il y a une pièce intermédiaire (7) qui peut être rallongée téléscopiquement entre les ailettes de réduction en pâte (2) et les ailettes de nettoyage (5).

3. Un triturateur selon la revendication 1 **caractérisé en ce que** la plaque tournante (6) est attachée aux ailettes de réduction en pâte (2).

4. Un triturateur selon la revendication 1 **caractérisé en ce que** les ailettes de réduction en pâte (2), les ailettes de nettoyage (5) et la plaque tournante (6) tournent ensemble à l'aide d'un même mécanisme de commande.

5. Un triturateur selon la revendication 1 **caractérisé en ce qu'**il y a, au centre du rotor, une portion de tube (1) orientée de façon à s'éloigner des ailettes de réduction en pâte (2) et tournant avec le rotor.

6. Un triturateur selon la revendication 1 **caractérisé en ce que** la masse de fibres est retirée des ailettes de réduction en pâte (2) essentiellement dans la direction de la plaque tournante (6).
